(19) **Europäisches Patentamt**
**European Patent Office**
**Office européen des brevets**

(11) **EP 4 664 395 A1**

(12) **EUROPEAN PATENT APPLICATION**
published in accordance with Art. 153(4) EPC

(43) Date of publication:
**17.12.2025 Bulletin 2025/51**

(21) Application number: **23926804.8**

(22) Date of filing: **16.03.2023**

(51) International Patent Classification (IPC):
**G06T 7/00** (2017.01)

(52) Cooperative Patent Classification (CPC):
**G06T 7/00**

(86) International application number:
**PCT/CN2023/081866**

(87) International publication number:
**WO 2024/187450 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Baojian**
  **Shenzhen, Guangdong 518129 (CN)**
• **LUO, Jiajin**
  **Shenzhen, Guangdong 518129 (CN)**

• **PENG, Xiaohui**
  **Shenzhen, Guangdong 518129 (CN)**
• **HE, Jia**
  **Shenzhen, Guangdong 518129 (CN)**
• **YU, Yang**
  **Shenzhen, Guangdong 518129 (CN)**
• **ZHANG, Ping**
  **Shenzhen, Guangdong 518129 (CN)**
• **YANG, Xun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA TRANSMISSION METHOD, COMMUNICATION APPARATUS, AND COMMUNICATION
SYSTEM**

(57) Embodiments of this application provide a data transmission method, a communication apparatus, and a communication system. The method includes: A first apparatus sends first configuration information to a plurality of second apparatuses, where the first configuration information is used for sending point cloud data on a same air interface resource by the plurality of second apparatuses. The first apparatus receives point cloud data from at least two of the plurality of second apparatuses. In this solution, the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

FIG. 9

**Description**

TECHNICAL FIELD

This application relates to the field of wireless communication technologies, and in particular, to a data transmission method, a communication apparatus, and a communication system.

BACKGROUND

A point cloud (point cloud, PC) is a set of data points in space, used to represent a shape or an object. A point in the point cloud is usually a point in three-dimensional (3D) space, and coordinates of the point are usually represented by Cartesian coordinates (X, Y, Z).

After a plurality of point cloud generation devices collect data of a same target object to obtain point cloud data, the collected point cloud data may be reported to a same processing device to fuse the received point cloud data.

However, in a point cloud data reporting process, there is a problem of how to reduce occupied transmission resources, communication delay, and noise power to be resolved.

SUMMARY

This application provides a data transmission method, a communication apparatus, and a communication system, to reduce occupied transmission resources, communication delay, and noise power in a point cloud data reporting process.

According to a first aspect, an embodiment of this application provides a data transmission method. The method is performed by a first apparatus. The first apparatus may be a terminal device, a network device, or another device. The method includes: The first apparatus sends first configuration information to a plurality of second apparatuses, where the first configuration information is used for sending point cloud data on a same air interface resource by the plurality of second apparatuses. The first apparatus receives point cloud data from at least two of the plurality of second apparatuses.

In the foregoing solution, the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

In a possible implementation, the method further includes: The first apparatus sends resource configuration information to the plurality of second apparatuses, where the resource configuration information is used for configuring the air interface resource.

In a possible implementation, the method further includes: The first apparatus sends indication information to the at least two second apparatuses, where the indication information indicates the at least two second apparatuses to send the point cloud data on the air interface resource.

In a possible implementation, the method further includes: The first apparatus receives notification information from the plurality of second apparatuses, where the notification information indicates whether the second apparatus participates in point cloud fusion.

In the foregoing solution, the first apparatus receives the notification information from the second apparatus, to notify the first apparatus whether the second apparatus participates in point cloud fusion. This helps the first apparatus accurately determine processing of the second apparatus participating in point cloud fusion, so that data processing can be correctly performed.

In a possible implementation, the method further includes: The first apparatus determines, based on the notification information, a quantity of second apparatuses participating in point cloud fusion, where the quantity is equal to a quantity of the at least two second apparatuses.

The foregoing solution helps the first apparatus subsequently correctly process the point cloud data from the second apparatus based on the quantity of second apparatuses participating in point cloud fusion.

In a possible implementation, the first configuration information includes an operation type or a preprocessing manner.

The foregoing solution helps the second apparatus correctly preprocess the point cloud data based on the operation type or the preprocessing manner.

In a possible implementation, the first configuration information further includes a point cloud traversal manner, and the point cloud traversal manner is linear traversal or recursive traversal.

The foregoing solution helps the second apparatus report the point cloud data to the first apparatus in a correct manner based on the point cloud traversal manner.

In a possible implementation, the operation type is a modulo operation or a geometric averaging operation.

In a possible implementation, the first configuration information further includes an operation parameter, and the operation parameter is used for preprocessing the point cloud data.

The foregoing solution helps the second apparatus correctly preprocess the point cloud data based on the operation parameter.

In a possible implementation, the operation type is a maximum value calculation operation, and the operation parameter includes an exponent.

The foregoing solution helps the second apparatus correctly preprocess point cloud data that needs to participate in the maximum value calculation operation.

In a possible implementation, the operation type is an averaging operation.

In a possible implementation, the method further includes: The first apparatus performs post-processing on the point cloud data based on a post-processing function.

The foregoing solution helps implement correct processing of the point cloud data.

In a possible implementation, the operation type is a weighted sum operation, and the operation parameter includes a weight.

The foregoing solution helps the second apparatus correctly preprocess point cloud data that needs to participate in the weighted sum operation.

According to a second aspect, an embodiment of this application provides a data transmission method. The method is performed by a plurality of second apparatuses, and the second apparatus may be a terminal device, a network device, or another device. The method includes: The plurality of second apparatuses receive first configuration information from a first apparatus, where the first configuration information is used for sending point cloud data on a same air interface resource by the plurality of second apparatuses. At least two of the plurality of second apparatuses send point cloud data to the first apparatus on the air interface resource.

In the foregoing solution, the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

In a possible implementation, the method further includes: The plurality of second apparatuses receive resource configuration information from the first apparatus, where the resource configuration information is used for configuring the air interface resource.

In the foregoing solution, the plurality of second apparatuses receive, from the first apparatus, the resource configuration information used for configuring the air interface resource. This helps the plurality of second apparatuses send the point cloud data on the same air interface resource, thereby improving resource utilization.

In a possible implementation, the method further includes: The at least two second apparatuses receive indication information from the first apparatus, where the indication information indicates the at least two second apparatuses to send the point cloud data on the air interface resource.

In a possible implementation, the method further includes: The plurality of second apparatuses send notification information to the first apparatus, where the notification information indicates whether the second apparatus participates in point cloud fusion.

In the foregoing solution, the second apparatus sends the notification information to the first apparatus, to notify the first apparatus whether the second apparatus participates in point cloud fusion. This helps the first apparatus accurately determine processing of the second apparatus participating in point cloud fusion, so that data processing can be correctly performed.

In a possible implementation, the first configuration information includes an operation type or a preprocessing manner.

The foregoing solution helps the second apparatus correctly preprocess the point cloud data based on the operation type or the preprocessing manner.

In a possible implementation, the first configuration information further includes a point cloud traversal manner, and the point cloud traversal manner is linear traversal or recursive traversal.

The foregoing solution helps the second apparatus report the point cloud data to the first apparatus in a correct manner based on the point cloud traversal manner.

In a possible implementation, the operation type is an averaging operation, a modulo operation, or a geometric averaging operation.

In a possible implementation, the first configuration information further includes an operation parameter, and the operation parameter is used for preprocessing the point cloud data.

The foregoing solution helps the second apparatus correctly preprocess the point cloud data based on the operation parameter.

In a possible implementation, the operation type is a maximum value calculation operation, and the operation parameter includes an exponent.

The foregoing solution helps the second apparatus correctly preprocess point cloud data that needs to participate in the maximum value calculation operation.

In a possible implementation, the operation type is a weighted sum operation, and the operation parameter includes a weight.

The foregoing solution helps the second apparatus correctly preprocess point cloud data that needs to participate in the weighted sum operation.

According to a third aspect, an embodiment of this application provides a data transmission method. The method is performed by a second apparatus, and the second apparatus may be a terminal device, a network device, or another device. The method includes: A second apparatus receives first configuration information from a first apparatus, where the first configuration information is used for sending point cloud data on air interface resource by the second apparatuses. The second apparatus sends the point cloud data to the first apparatus on the air interface resource, where the air interface resource is further used for sending the point cloud data to the first apparatus by another apparatus.

In the foregoing solution, the second apparatus and the another apparatus send the point cloud data to the first apparatus on the same air interface resource. Because air interface data of a plurality of apparatuses is sent on the same air interface resource, air interface resource utilization is improved, thereby reducing occupied transmission resources and communication delay. In addition, because the point cloud data of the plurality of apparatuses is sent simultaneously and received simultaneously, avoiding individual superimposition of noise for each piece of point cloud data, and therefore reducing noise power.

In a possible implementation, the method further includes: The second apparatus receives resource configuration information from the first apparatus, where the resource configuration information is used for configuring the air interface resource.

In the foregoing solution, the second apparatus receives, from the first apparatus, the resource configuration information used for configuring the air interface resource, to send the point cloud data on the same air interface resource by the plurality of second apparatuses, thereby improving resource utilization.

In a possible implementation, the method further includes: The second apparatus receives indication information from the first apparatus, where the indication information indicates the second apparatuses to send the point cloud data on the air interface resource.

In a possible implementation, the method further includes: The second apparatus sends notification information to the first apparatus, where the notification information indicates whether to participate in point cloud fusion.

In the foregoing solution, the second apparatus sends the notification information to the first apparatus, to notify the first apparatus whether the second apparatus participates in point cloud fusion. This helps the first apparatus accurately determine processing of the second apparatus participating in point cloud fusion, so that data processing can be correctly performed.

In a possible implementation, the first configuration information includes an operation type or a preprocessing manner.

In the foregoing solution, the first configuration information received by the second apparatus from the first apparatus includes the operation type or the preprocessing manner, so that the second apparatus correctly preprocesses the point cloud data based on the operation type or the preprocessing manner.

In a possible implementation, the first configuration information further includes a point cloud traversal manner, and the point cloud traversal manner is linear traversal or recursive traversal.

The foregoing solution helps the second apparatus report the point cloud data to the first apparatus in a correct manner based on the point cloud traversal manner.

In a possible implementation, the operation type is an averaging operation, a modulo operation, or a geometric averaging operation.

In a possible implementation, the first configuration information further includes an operation parameter, and the operation parameter is used for preprocessing the point cloud data.

The foregoing solution helps the second apparatus correctly preprocess the point cloud data based on the operation parameter.

In a possible implementation, the operation type is a maximum value calculation operation, and the operation parameter includes an exponent.

The foregoing solution helps the second apparatus correctly preprocess point cloud data that needs to participate in the maximum value calculation operation.

In a possible implementation, the operation type is a weighted sum operation, and the operation parameter includes a weight.

The foregoing solution helps the second apparatus correctly preprocess point cloud data that needs to participate in the weighted sum operation.

According to a fourth aspect, an embodiment of this application provides a communication apparatus. The apparatus has a function of implementing any implementations according to the first aspect and the third aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or means (means) configured to perform steps of any implementations according to the first aspect and the third aspect.

According to a sixth aspect, an embodiment of this application provides a communication apparatus, including at least one processor. The processor is configured to run at least one of the following: computer instructions or a program, and a logic circuit, to perform any implementations according to the first aspect and the third aspect.

In a possible implementation, the processor is coupled to a memory, and the memory stores the foregoing computer instructions or program; or the memory stores a configuration file of the logic circuit. Optionally, the memory may be located in the apparatus. In other words, the apparatus includes the memory. Optionally, the processor and the memory are integrated together. Optionally, the memory may alternatively be located outside the apparatus.

In a possible implementation, the communication apparatus further includes an interface circuit, and the interface circuit is configured to input and/or output a signal. The processor is configured to communicate with another apparatus by using the interface circuit.

In a possible implementation, the communication apparatus is a chip.

According to a seventh aspect, an embodiment of this application further provides a computer program product. The computer program product includes a computer program or instructions. When the computer program or the instructions are run by a communication apparatus, any implementations according to the first aspect to the third aspect is performed.

According to an eighth aspect, an embodiment of this application further provides a computer-readable storage medium. The computer-readable storage medium stores instructions, and when the instructions are run on a communication apparatus, any implementations according to the first aspect to the third aspect is performed.

According to a ninth aspect, an embodiment of this application further provides a chip system, including a processor, configured to perform any implementations according to the first aspect to the third aspect.

According to a tenth aspect, an embodiment of this application further provides a communication system, including a first apparatus configured to perform any implementations according to the first aspect, and a second apparatus configured to perform any implementations according to the second aspect.

## BRIEF DESCRIPTION OF DRAWINGS

FIG. 1 is a diagram of an architecture of a communication system to which an embodiment of this application is applied;
FIG. 2 is another diagram of a communication system to which an embodiment of this application is applied;
FIG. 3 is a diagram of a point cloud on a spherical surface;
FIG. 4 is a diagram of various linear traversal manners;
FIG. 5 is a diagram of various recursive traversal manners;
FIG. 6 is a diagram of a point cloud fusion process in imaging application;
FIG. 7 is a diagram of an over-the-air computation architecture;
FIG. 8 is a diagram of a data processing procedure of air computing;
FIG. 9 is a schematic flowchart of a data transmission method according to an embodiment of this application;
FIG. 10(a) is a schematic flowchart of a data transmission method according to an embodiment of this application;
FIG. 10(b) is a schematic flowchart of a data transmission method according to an embodiment of this application;
FIG. 11 is a diagram of a possible structure of a communication apparatus according to an embodiment of this application; and
FIG. 12 is a diagram of a possible structure of a communication apparatus according to an embodiment of this application.

## DESCRIPTION OF EMBODIMENTS

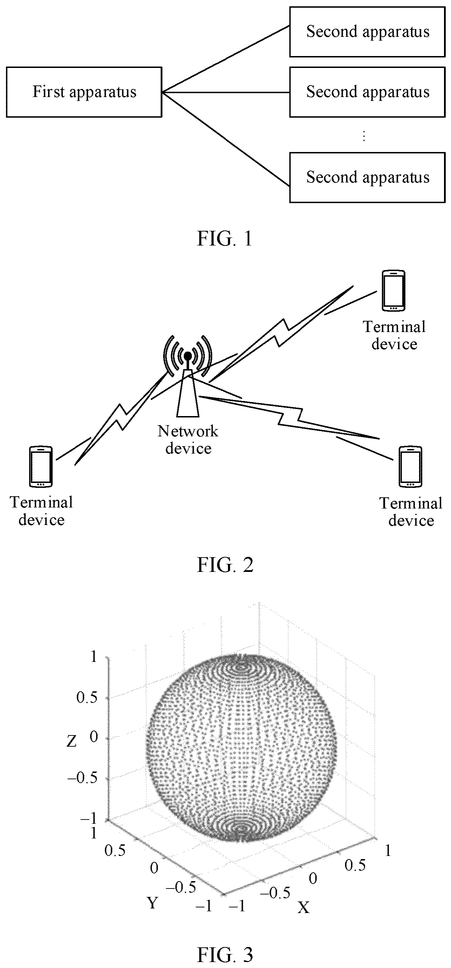

FIG. 1 is a diagram of an architecture of a communication system to which an embodiment of this application is applied. The communication system includes a first apparatus and a plurality of second apparatuses. "A plurality of" herein means two or more. FIG. 1 shows an example of three second apparatuses.

The first apparatus in embodiments of this application is also referred to as a processing device, a point cloud data processing device, a point cloud fusion device, or the like, and has a capability of performing fusion processing on the point cloud data from a plurality of second apparatuses. The performing the fusion processing may be performed by the first apparatus or by the first apparatus via another apparatus.

The second apparatus in embodiments of this application is also referred to as a point cloud generation device, a point cloud production device, a point cloud collection device, or the like, and has a capability of collecting point cloud data and reporting the point cloud data to the first apparatus.

In an implementation, the first apparatus is a network device or a module used for the network device, and the second apparatus is a terminal device or a module used for the terminal device. The first apparatus communicates with the second apparatus through an air interface.

In another implementation, the first apparatus is a terminal device or a module used for the terminal device, and the second apparatus is a network device or a module used for the network device. The first apparatus communicates with the second apparatus through an air interface.

In still another implementation, the first apparatus is a network device or a module used for the network device, and the second apparatus is a network device or a module used for the network device. The first apparatus communicates with the second apparatus through an air interface or in a wired manner.

In yet another implementation, the first apparatus is a terminal device or a module used for the terminal device, and the second apparatus is a terminal device or a module used for the terminal device. The first apparatus communicates with the second apparatus through an air interface.

Certainly, the first apparatus and the second apparatus in embodiments of this application may alternatively be devices of another type. For example, the first apparatus may alternatively be a device such as a cloud device or a cloud server, and the second apparatus is a terminal device, a network device, or another device. This is not limited in this application.

In embodiments of this application, the terminal device may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal device may be a cellular phone, a mobile phone (mobile phone), a pad (pad), a wireless data card, a wireless modem, a satellite terminal, a device mounted on a vehicle (for example, a car, a bicycle, an electric vehicle, an aircraft, a ship, a train, or a high-speed railway), a mechanical arm, a workshop device, a wearable device (for example, a smart watch, a smart band, or a pedometer), an uncrewed aerial vehicle, a robot, a smart point of sale (point of sale, POS) machine, a customer-premises equipment (customer-premises equipment, CPE), or a computer with a wireless transceiver function, a virtual reality (virtual reality, VR) terminal device, an augmented reality (augmented reality, AR) terminal device, a terminal device in industrial control (industrial control), a terminal device in self-driving (self-driving), a terminal device in telemedicine (remote medical), a terminal device in smart grid (smart grid), a terminal in transportation safety (transportation safety), a terminal device in a smart city (smart city), and a terminal in a smart home (smart home) (for example, smart home devices such as refrigerators, televisions, air conditioners, and electric meters). The terminal device may alternatively be another device having a terminal function. A device form of the terminal is not limited in embodiments of this application. An apparatus configured to implement a function of the terminal device may be a terminal device, or may be an apparatus that can support the terminal device in implementing the function, for example, a chip system. The apparatus may be mounted in the terminal device or used in a manner of matching the terminal device. In embodiments of this application, the chip system may include a chip, or may include a chip and another discrete component.

The network device in embodiments of this application is a device having a wireless transceiver function, and is configured to communicate with the terminal device or another network device, or may be a device that can connect the terminal device to a wireless network, for example, a radio access network (radio access network, RAN) device or a node. The network device in embodiments of this application may include various forms of base stations, for example, a base station (base station); an evolved NodeB (evolved NodeB, eNodeB); a next generation NodeB (next generation NodeB, gNB); a macro base station; a micro base station (also referred to as a small cell); a relay station; an access point; a device that implements a base station function in a communication system evolved after 5G; an access point (access point, AP), an integrated access and backhaul (integrated access and backhaul, IAB) node, a transmitting and receiving point (transmitting and receiving point, TRP), and a transmitting point (transmitting point, TP) in a wireless local area network (wireless local area network, WLAN) system; a mobile switching center; and a device that undertakes a base station function in device-to-device (Device-to-Device, D2D), vehicle-to-everything (vehicle-to-everything, V2X), and machine-to-machine (machine-to-machine, M2M) communication. The network device may further include a network device in a non-terrestrial network (non-terrestrial network, NTN) communication system, that is, the network device may be deployed on a high-altitude platform or a satellite. In some possible scenarios, different network devices separately implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the network device is not limited. An apparatus configured to implement a function of the network device may be a network device, or may be an apparatus that can support the network device in implementing the function, for example, a chip system. The apparatus may be mounted in the network device or used in combination with the network device.

FIG. 2 is another diagram of a communication system to which an embodiment of this application is applied. The communication system includes a network device and a plurality of terminal device. The network device is a specific example of the foregoing first apparatus, and the terminal device is a specific example of the foregoing second apparatus.

For ease of understanding embodiments of this application, the following explains some concepts or terms in this application. It should be noted that these concepts or terms are also regarded as a part of the present invention.

1. Point cloud

Point cloud is a set of data points in space, used to represent a shape or an object. A point in the point cloud is usually a point in three-dimensional (3D) space, and coordinates of the point are usually represented by Cartesian coordinates (X, Y, Z). FIG. 3 is a diagram of a point cloud on a spherical surface. In addition to coordinate information, each point in the point cloud may further have strength information. Methods for generating a point cloud include 3D sampling (for example, sampling from a 3D model surface), 3D scanning (for example, lidar, structured light scanning, and photogrammetry), 3D imaging (for example, synthesizing aperture radar imaging, computer tomography imaging, and nuclear magnetic resonance imaging), and the like.

2. Traversal of a point cloud

The traversal of a point cloud is essentially traversal of space represented by the point cloud. Typical spatial traversal manners include linear traversal and recursive traversal.

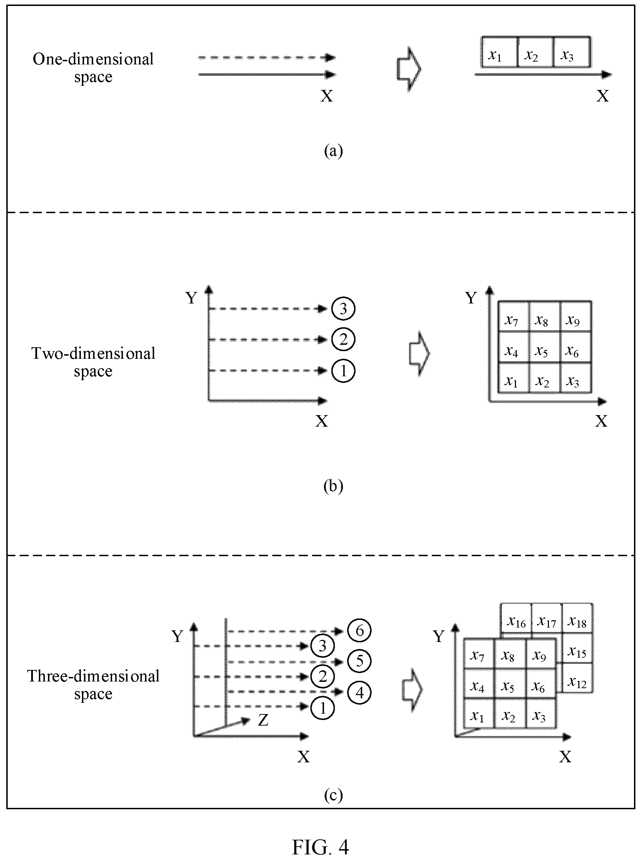

FIG. 4 is a diagram of various linear traversal manners. The linear traversal is to sequentially traverse spatial areas of a same size along each spatial dimension. (a) in FIG. 4 represents a linear traversal process for one-dimensional space. (b) in FIG. 4 represents a linear traversal process for two-dimensional space. (c) in FIG. 4 represents a linear traversal process for three-dimensional space.

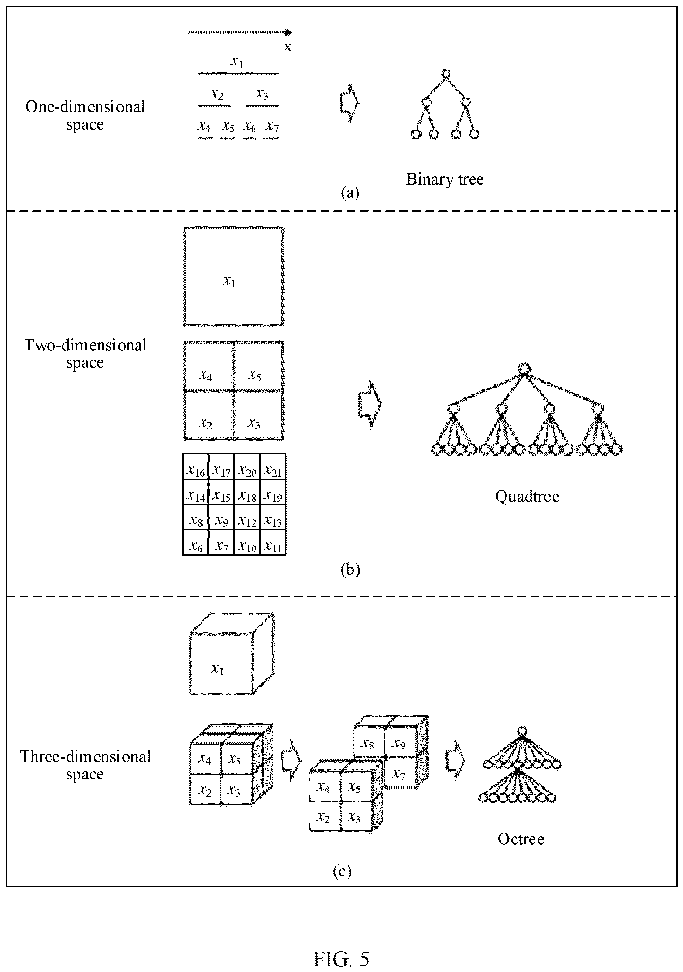

FIG. 5 is a diagram of various recursive traversal manners. The recursive traversal is to divide space into a plurality of levels of spatial areas of different sizes, and traverse the spatial areas in ascending order of levels. (a) in FIG. 5 represents a recursive traversal process for one-dimensional space, and traversal of binary tree is specifically used. (b) in FIG. 5 represents a recursive traversal process for two-dimensional space, and traversal of quadtree is specifically used. (c) in FIG. 5 represents a recursive traversal process for three-dimensional space, and traversal of octree is specifically used.

3. Point cloud fusion

An operation of aggregating, to the first apparatus, a plurality of pieces of point cloud data generated by the plurality of second apparatuses and combining the plurality of pieces of point cloud data is referred to as point cloud fusion. Compared with a single point cloud, the fused point cloud can provide more comprehensive scene information, a better signal-to-noise ratio, and other advantages.

Typical point cloud fusion mainly includes two steps: aggregation of point cloud data and combination of the point cloud data. Operations used during the combination of the point cloud data may be classified into two types based on a physical meaning of the point cloud data: numerical fusion and probabilistic fusion. The numerical fusion refers to a combination operation performed on the point cloud data when a value of the point cloud data represents a physical quantity like brightness, intensity, or concentration. The probabilistic fusion refers to a combination operation performed on the point cloud data when a value of the point cloud data represents a physical quantity like a detection probability or an existence probability. Common operation types include addition (sum and averaging), product, maximum value calculation, and the like.

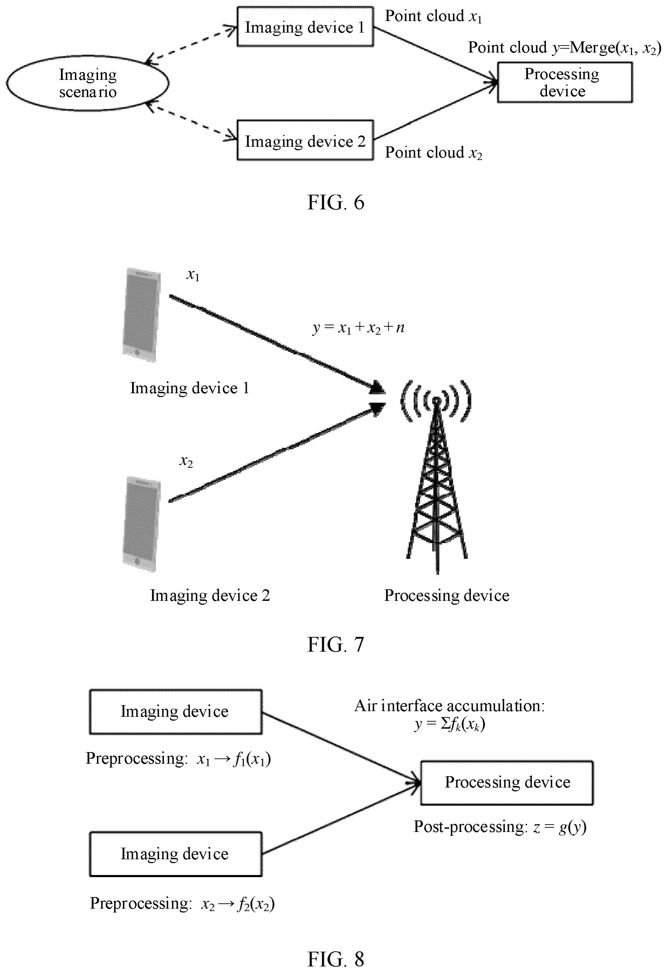

FIG. 6 is a diagram of a point cloud fusion process in imaging application. In this example, the second apparatus is an imaging device, and the first apparatus is a processing device. x1 in point cloud data generated by an imaging device 1 is sent to the processing device, x2 in point cloud data generated by an imaging device 2 is sent to the processing device, and then the processing device combines x1 and x2 to obtain y.

For example, in imaging application, a current technical solution of point cloud fusion has the following defects:

First, a plurality of imaging devices respectively send point cloud data to the processing device by using different transmission resources, and a large quantity of transmission resources are occupied regardless of whether time division multiplexing or frequency division multiplexing is used, leading to substantial communication delay.

Second, because each piece of point cloud data is individually sent and received, noise of each piece of point cloud data is individually superimposed at a receive end, leading to an increase in overall noise power.

To resolve the foregoing problems, this application proposes use of an over-the-air computation (air computing) architecture for point cloud data transmission. FIG. 7 is a diagram of an over-the-air computation architecture. The over-the-air computation architecture is also referred to as an "air interface+computing" architecture. Air computing is a method that uses a linear additive property of signals over an air interface to complete a specific operation. In the over-the-air computation architecture, when joint processing is performed on data from different second apparatuses (for example, imaging devices), a specific operation is completed based on the linear additive property of signals over the air interface during signal transmission. In the over-the-air computation architecture, different second apparatuses send, to the first apparatus (for example, the processing device) by using a same transmission resource (also referred to as an air interface resource), data that needs to be combined. The transmission resource herein includes a time resource and a frequency resource. That two second apparatuses use a same transmission resource means that the two second apparatuses use a same time resource and a same frequency resource. For example, in the example in FIG. 7, an imaging device 1 sends point cloud data x1 to a processing device on a transmission resource 1, and an imaging device x2 also sends point cloud data x2 to the same processing device on the transmission resource 1. Because x1 and x2 are sent on the same transmission resource 1, data (that is, y) received by the processing device is data obtained through linear addition.

FIG. 8 is a diagram of a data processing procedure of air computing. FIG. 8 is described by using an example of imaging application in combination with the air computing. The data processing procedure of the over-the-air computation includes three parts: preprocessing, air interface accumulation, and post-processing. Operation types supported by the over-the-air computation include a summation-type operation and a product-type operation. The summation-type operation includes weighted sum, averaging, modulo, and the like. The product-type operation includes geometric averaging, maximum value calculation, and the like.

Table 1 lists typical operation types supported by the air computing.

Table 1

| Operation type | Formula | Description |
|---|---|---|
| Weighted sum | $z = \sum_k w_k x_k$ | (1) $k$ is a positive integer, and $1 \leq k \leq K$. |
| Averaging | $z = \dfrac{1}{K} \sum_k x_k$ | (2) K is a quantity of terminal devices (for example, imaging devices) participating in point cloud fusion. (3) $p$ is a positive real number, and $p \geq 1$. |
| Modulo | $z = \sqrt{\sum_k x_k^2}$ | (4) The maximum value calculation operation is approximate calculation. |

(continued)

| Operation type | Formula | Description |
|---|---|---|
| Geometric averaging | $z = \left( \prod_k x_k \right)^{\frac{1}{K}}$ | |
| Maximum value calculation | $z = \left( \sum_k |x_k|^p \right)^{\frac{1}{p}}$ | |

There are a plurality of specific implementations of the air computing, including an implementation based on a single carrier and an implementation based on orthogonal frequency division multiplexing access (orthogonal frequency division multiplexing access, OFDMA). In the implementation based on the single carrier, a plurality of second apparatuses (for example, imaging devices) preprocess respective data, and then transmit and receive the respective data on a same carrier frequency in an amplitude modulation manner. A first apparatus (for example, a processing device) demodulates, on the carrier frequency, data superimposed on an air interface, and performs post-processing. Similarly, in the implementation based on OFDMA, a plurality of second apparatuses preprocess respective data, and then transmit and receive the respective data on a same time-frequency resource in an OFDM modulation manner. A first apparatus demodulates, on the time-frequency resource, data superimposed on an air interface, and performs post-processing. The over-the-air computation has a great application value, and is applicable to fields including distributed perception, distributed consensus, distributed edge learning, and the like.

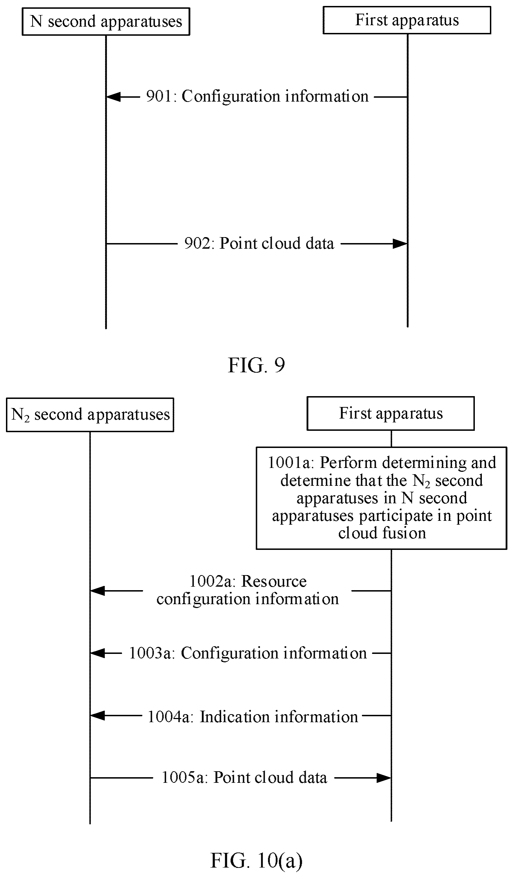

FIG. 9 is a schematic flowchart of a data transmission method according to an embodiment of this application. The method is applicable to but not limited to the following scenarios: fusion processing of point cloud data generated by application in, for example, radar imaging, laser point cloud, infrared radiation imaging, and time of flight (time of flight, ToF) camera imaging.

The method includes the following steps.

Step 901: A first apparatus sends first configuration information to N second apparatuses. Correspondingly, the N second apparatuses receive the first configuration information.

N is an integer greater than or equal to 2.

The first configuration information is used for sending point cloud data on a same air interface resource by the N second apparatuses.

Step 902: $N_1$ second apparatuses in the N second apparatuses respectively send point cloud data to the first apparatus on the same air interface resource. Correspondingly, the first apparatus receives the point cloud data.

$N_1$ is an integer greater than or equal to 2 and less than or equal to N.

For example, the first apparatus sends the first configuration information to 10 second apparatuses, and then the 10 second apparatuses all send the point cloud data to the first apparatus. For another example, the first apparatus sends the first configuration information to 10 second apparatuses, then eight of the 10 second apparatuses send the point cloud data to the first apparatus, while the other two second apparatuses do not send the point cloud data.

When $N_1$ is less than N, $N_1$ second apparatuses in the N second apparatuses do not send the point cloud data. A reason why the second apparatus does not send the point cloud data includes but is not limited to:

(1) The second apparatus cannot send the point cloud data on the same air interface resource.
(2) The second apparatus has temporary heavy load or is temporarily faulty.

If the second apparatus cannot send the point cloud data on the same air interface resource, the second apparatus may cancel sending the point cloud data on the same air interface resource, and individually send the point cloud data to the first apparatus by using another air interface resource; or the second apparatus may request the first apparatus to reconfigure the same air interface resource used for sending the point cloud data by the N second apparatuses. The method can ensure correct sending of the point cloud data, and help the first apparatus correctly process the point cloud data.

The air interface resource used for sending the point cloud data includes a time resource and a frequency resource. The same air interface resource means that time resources are the same and frequency resources are the same. Alternatively, the same air interface resource is understood as that the air interface resource used by the $N_1$ second apparatus for sending the point cloud data has same time domain locations and same frequency domain locations. For a long term evolution (long term evolution, LTE) system, the same air interface resource means that resource elements (resource elements, REs) or resource blocks (resource blocks, RBs) that constitute the air interface resource are the same. Therefore, in the LTE system, allocating same REs or RBs to a plurality of second apparatuses enables the plurality of second apparatuses to send point cloud data on a same air interface resource. For a new radio (new radio, NR) system, the same air interface resource means that REs, RBs, resource element groups (resource element groups, REGs), resource block groups (resource block groups, RBGs), or control channel elements (control channel elements, CCEs) that constitute the air interface resource are the same. Therefore, in the NR system, allocating same REs, RBs, REGs, RBGs, or CCEs to a plurality of second apparatuses enables the plurality of second apparatuses to send point cloud data on a same air interface resource. For a WLAN system, the same air interface resource means that resource units (resource units, RUs) that constitute the air interface resource are the same. Therefore, in the WLAN system, allocating same RUs to a plurality of second apparatuses enables the plurality of second apparatuses to send point cloud data on a same air interface resource.

In an implementation, the first configuration information in step 901 includes an operation type or a preprocessing manner, and the preprocessing manner indicates a manner of preprocessing the point cloud data. The operation type may be a weighted sum operation, an averaging operation, a modulo operation, a geometric averaging operation, or a maximum value calculation operation shown in Table 1.

In an implementation, the first configuration information in step 901 further includes a point cloud traversal manner, and the point cloud traversal manner is linear traversal or recursive traversal. For example, for one-dimensional data, the point cloud traversal manner may be one-dimensional linear traversal or traversal of binary tree; for two-dimensional data, the point cloud traversal manner may be two-dimensional linear traversal or traversal of quadtree; and for three-dimensional data, the point cloud traversal manner may be three-dimensional linear traversal or traversal of octree. It should be noted that the at least two second apparatuses respectively obtain corresponding point cloud data in a same traversal manner and send the point cloud data on the same air interface resource. Three-dimensional point cloud data is used as an example. It is assumed that there are three second apparatuses: D1, D2, and D3. D1 obtains, in the three-dimensional linear traversal manner, point cloud data 1 with coordinates $(x1, y1, z1)$ that is stored in D1; D2 obtains, in the three-dimensional linear traversal manner, point cloud data 2 with coordinates $(x1, yl, z1)$ that is stored in D2; D3 obtains, in the three-dimensional linear traversal manner, point cloud data 3 with coordinates $(x1, yl, z1)$ that is stored in D3; and then D1, D2, and D3 respectively send the point cloud data 1, the point cloud data 2, and the point cloud data 3 to the first apparatus on a same air interface resource 1. Then, D1 obtains, in the three-dimensional linear traversal manner, point cloud data 4 with coordinates $(x1, y1, z2)$ that is stored in D1; D2 obtains, in the three-dimensional linear traversal manner, point cloud data 5 with coordinates $(x1, yl, z2)$ that is stored in D2; D3 obtains, in the three-dimensional linear traversal manner, point cloud data 6 with coordinates $(x1, y1, z2)$ that is stored in D3; and then D1, D2, and D3 respectively send the point cloud data 4, the point cloud data 5, and the point cloud data 6 to the first apparatus on a same air interface resource 2. The rest may be deduced by analogy.

In an implementation, for the weighted sum operation and the maximum value calculation operation, the first configuration information in step 901 may further include an operation parameter, and the operation parameter is used for preprocessing the point cloud data. For the weighted sum operation, the operation parameter includes a weight. For the maximum value calculation operation, the operation parameter includes an exponent.

It should be noted that the point cloud traversal manner, the operation type, the operation parameter, and the preprocessing manner that are included in the first configuration information are all optional content. In another implementation, the foregoing information may alternatively be predefined by a protocol, or the foregoing information may be determined by the second apparatus.

With reference to the embodiment in FIG. 9, the following describes a specific implementation process of the foregoing five operation types. In the following example, a quantity of second apparatuses participating in point cloud fusion is K, and K is an integer greater than 1. A processing process of a $k^{th}$ second apparatus in the K second apparatuses is used as an example for description.

Example 1: The operation type is the weighted sum operation.

For this example, the operation type is the weighted sum operation, the operation parameter includes weights $w_k$ respectively corresponding to the plurality of second apparatuses. The second apparatus preprocesses the point cloud data based on a preprocessing function, the preprocessing function is $f_k(x_k) = w_k x_k$, an air interface accumulation function is $y = \Sigma_k f_k(x_k)$, and the first apparatus does not need to perform post-processing, in other words, a point cloud data fusion processing result determined by the first apparatus is $z = y$. Therefore, $z = \Sigma_k w_k x_k$.

Example 2: The operation type is the averaging operation.

For this example, the operation type is the averaging operation, there is no operation parameter. The second apparatus does not need to perform preprocessing, an air interface accumulation function is $y = \Sigma_k x_k$, the first apparatus performs post-processing on the point cloud data based on a post-processing function, and the post-processing function is $z = y/K$. Therefore, $z = \frac{1}{K}\Sigma_k x_k$.

Example 3: The operation type is the modulo operation.

For this example, the operation type is the modulo operation, and there is no operation parameter. The second apparatus participating in point cloud fusion preprocesses the point cloud data based on a preprocessing function, the preprocessing function is $f_k(x_k) = x_k^2$, an air interface accumulation function is $y = \Sigma_k f_k(x_k)$, the first apparatus performs post-processing on the point cloud data based on a post-processing function, and the post-processing function is $z = \sqrt{y}$. Therefore, $z = \sqrt{\Sigma_k x_k^2}$.

Example 4: The operation type is the geometric averaging operation.

For this example, the operation type is the geometric averaging operation, and there is no operation parameter. The second apparatus preprocesses the point cloud data based on a preprocessing function, the preprocessing function is $f_k(x_k) = \log(x_k)$, an air interface accumulation function is $y = \Sigma_k f_k(x_k)$, the first apparatus performs post-processing on the point cloud data based on a post-processing function, and the post-processing function is $z = (e^y)^{\frac{1}{K}}$. Therefore, $z = (e^{\Sigma_k \log(x_k)})^{\frac{1}{K}}$, which may also be expressed as $z = (\prod_k x_k)^{\frac{1}{K}}$.

Example 5: The operation type is the maximum value calculation operation.

For this example, the operation type is the maximum value calculation operation, the operation parameter is an exponent p, p is a real number greater than or equal to 1. The second apparatus preprocesses the point cloud data based on a preprocessing function, the preprocessing function is $f_k(x_k) = |x_k|^p$, an air interface accumulation function is $y = \Sigma_k f_k(x_k)$, the first apparatus performs post-processing on the point cloud data based on a post-processing function, and the post-processing function is $z = y^{\frac{1}{p}}$. Therefore, $z = (\sum_k |x_k|^p)^{\frac{1}{p}}$.

In the foregoing solution, an over-the-air computation architecture is used, and the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

FIG. 10(a) is a schematic flowchart of a data transmission method according to an embodiment of this application. The method is a specific example of the embodiment in FIG. 9. The method includes the following steps.

Step 1001a: A first apparatus performs determining and determines that $N_2$ second apparatuses in N second apparatuses participate in point cloud fusion.

For the N second apparatuses, the first apparatus determines whether each second apparatus participates in point cloud fusion, and finally determines that the $N_2$ second apparatuses in the N second apparatuses participate in point cloud fusion, and the other $N-N_2$ second apparatuses do not participate in point cloud fusion. $N_2$ is an integer greater than or equal to $N_1$ and less than or equal to N.

In an implementation, for each of the N second apparatuses, if the second apparatus satisfies a first condition, it is determined that the second apparatus participates in point cloud fusion; or if the second apparatus does not satisfy the first condition, it is determined that the second apparatus does not participate in point cloud fusion. The first condition includes one or more of the following conditions.

Condition 1: The second apparatus stores point cloud data requested by the first apparatus.

For example, the first apparatus sends a request message to the second apparatus. The request message includes a type of the point cloud data. The second apparatus sends a response message to the first apparatus. The response message indicates that the second apparatus stores the point cloud data indicated by the type of the point cloud data, or indicates that the second apparatus does not store the point cloud data indicated by the type of the point cloud data.

For another example, the first apparatus sends a request message to a data management center. The request message includes a type of the point cloud data and an identifier of the second apparatus. The data management center sends a response message to the first apparatus. The response message indicates that the second apparatus stores the point cloud data indicated by the type of the point cloud data, or indicates that the second apparatus does not store the point cloud data indicated by the type of the point cloud data. The data management center records information such as the type of the point cloud data stored in the second apparatus.

Condition 2: Quality of a channel between the first apparatus and the second apparatus satisfies a preset condition, for example, a signal-to-noise ratio is greater than a preset threshold, or a path loss is less than a preset threshold.

For example, the first apparatus obtains the quality of the channel between the first apparatus and the second apparatus through measurement, and determines whether the quality of the channel between the first apparatus and the second apparatus satisfies the preset condition.

For another example, the first apparatus sends a request message to the second apparatus. The request message is used to request to obtain the quality of the channel between the first apparatus and the second apparatus, the second apparatus sends the quality of the channel between the first apparatus and the second apparatus to the first apparatus, and then the first apparatus determines whether the quality of the channel between the first apparatus and the second apparatus satisfies the preset condition.

For another example, the first apparatus sends a request message to the second apparatus. The request message is used to request to determine whether the quality of the channel between the first apparatus and the second apparatus satisfies the preset condition. The second apparatus sends a response message to the first apparatus. The response message indicates whether the quality of the channel between the first apparatus and the second apparatus satisfies the preset condition.

For another example, the second apparatus periodically reports the quality of the channel between the first apparatus and the second apparatus to the first apparatus, and the first apparatus determines whether the quality of the channel between the first apparatus and the second apparatus satisfies the preset condition.

Condition 3: The second apparatus is online and a current status is normal (that is, the second apparatus is not in a busy or faulty state).

For example, the first apparatus and the second apparatus may periodically send a heartbeat packet to each other. The heartbeat packet is used by both apparatuses to determine whether a connection maintains. The first apparatus may determine, based on the heartbeat packet, whether the second apparatus is online; and determine, based on a receiving delay of the heartbeat packet, whether a current status is normal, that is, whether the second apparatus is in a busy or faulty state.

For another example, the first apparatus sends a request message to the second apparatus. The request message is used to request to obtain a status of the second apparatus. If the first apparatus receives no response message from the second apparatus for the request message, the first apparatus determines that the second apparatus is offline. If the first apparatus receives a response message from the second apparatus for the request message, the first apparatus determines that the second apparatus is online, and may further determine, based on indication information in the response message, whether the second apparatus is in a busy or faulty state.

Step 1002a: The first apparatus sends resource configuration information to the $N_2$ second apparatuses. Correspondingly, the $N_2$ second apparatuses receive the resource configuration information.

The resource configuration information is used for configuring a same air interface resource for the $N_2$ second apparatuses.

Step 1003a: The first apparatus sends first configuration information to the $N_2$ second apparatuses. Correspondingly, the $N_2$ second apparatuses receive the first configuration information.

The first configuration information is used for sending the point cloud data on the same air interface resource by the $N_2$ second apparatuses.

Step 1003a is a specific example of step 901 in the embodiment in FIG. 9.

In an implementation, the resource configuration information in step 1002a is carried in a radio resource control (radio resource control, RRC) message or a medium access control control element (medium access control control element, MAC CE), and the first configuration information in step 1003a is carried in downlink control information (downlink control information, DCI).

It should be noted that a sequence of step 1003a and step 1002a is not limited. In addition, in specific implementation, step 1003a and step 1002a may be alternatively combined into one step for execution. For example, the resource configuration information and the first configuration information are included in a same message (a broadcast message, a multicast message, or a unicast message) for sending, and the message may be sent in a periodic (periodic) manner, an aperiodic (aperiodic) manner, or a semi-persistent (semi-persistent) manner.

Step 1004a: The first apparatus sends indication information to the $N_2$ second apparatuses. Correspondingly, the $N_2$ second apparatuses receive the indication information.

The indication information indicates the $N_2$ second apparatuses to send the point cloud data on the same air interface resource. In other words, the first apparatus selects the $N_2$ second apparatuses that need to report the point cloud data; and indicates, by using the indication information, the $N_2$ second apparatuses to report the point cloud data.

In a possible implementation, the indication information of the first apparatus performs indication implicitly. For example, the first apparatus implicitly indicates, by sending the first configuration information, the $N_2$ second apparatuses to send the point cloud data on the same air interface resource.

Step 1004a may be performed between step 1001a and step 1002a, or may be performed between step 1002a and step 1003a, or may be performed between step 1003a and step 1005a. This is not limited in this application.

Step 1005a: $N_1$ second apparatuses in the $N_2$ second apparatuses respectively send point cloud data to the first apparatus on the same air interface resource. Correspondingly, the first apparatus receives the point cloud data.

Step 1005a is the same as step 902 in the embodiment of FIG. 9, and reference may be made to the foregoing description.

In an implementation, $N_1$ and $N_2$ have a same value. For example, $N_1 = N_2 = 8$, that is, the first apparatus sends the resource configuration information, the first configuration information, and the indication information to eight second apparatuses, and then the eight second apparatuses all send the point cloud data to the first apparatus.

In an implementation, $N_1$ is less than $N_2$. For example, $N_2=8$, and $N_1=6$, that is, the first apparatus sends the resource configuration information, the first configuration information, and the indication information to eight second apparatuses, and then six of the eight second apparatuses all send the point cloud data to the first apparatus, and the other two second apparatuses do not send the point cloud data.

In the foregoing solution, the first apparatus determines, from the N second apparatuses, $N_2$ second apparatuses participating in point cloud fusion; sends the resource configuration information and the first configuration information to the $N_2$ second apparatuses; and indicates, by using the indication information, the $N_2$ second apparatuses to send the point cloud data on the same air interface resource. In this solution, an over-the-air computation architecture is used, and the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

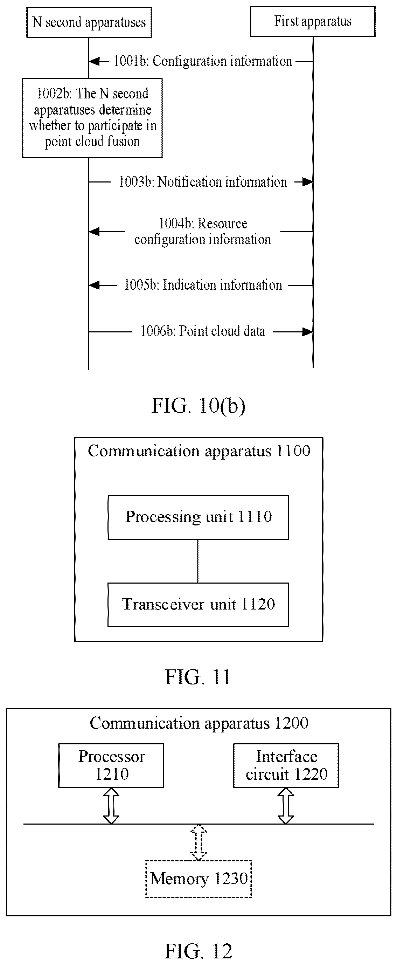

FIG. 10(b) is a schematic flowchart of a data transmission method according to an embodiment of this application. The method is a specific example of the embodiment in FIG. 9. The method includes the following steps.

Step 1001b: A first apparatus sends first configuration information to N second apparatuses. Correspondingly, the N second apparatuses receive the first configuration information.

The first configuration information is used for sending point cloud data on a same air interface resource by the N second apparatuses.

Step 1003a is a specific example of step 901 in the embodiment in FIG. 9.

Step 1002b: The N second apparatuses determine whether to participate in point cloud fusion.

After receiving the first configuration information, the N second apparatuses separately determine whether to participate in point cloud fusion. Specifically, $N_2$ second apparatuses in the N second apparatuses determine to participate in point cloud fusion, and the other $N-N_2$ second apparatuses determine not to participate in point cloud fusion. $N_2$ is an integer greater than or equal to $N_1$ and less than or equal to N.

In an implementation, for each of the N second apparatuses, if the second apparatus satisfies a second condition, the second apparatus determines to participate in point cloud fusion; or if the second apparatus does not satisfy the second condition, the second apparatus determines not to participate in point cloud fusion. The second condition includes one or more of the following conditions.

Condition 1: The second apparatus stores point cloud data requested by the first apparatus.

For example, the first apparatus sends a request message to the second apparatus. The request message includes a type of the point cloud data, and the second apparatus determines whether the point cloud data indicated by the type of the point cloud data is stored.

Condition 2: Quality of a channel between the first apparatus and the second apparatus satisfies a preset condition, for example, a signal-to-noise ratio is greater than a preset threshold, or a path loss is less than a preset threshold.

For example, the second apparatus obtains the quality of the channel between the first apparatus and the second apparatus through measurement, and determines whether the quality of the channel between the first apparatus and the second apparatus satisfies the preset condition.

For another example, the second apparatus sends a request message to the first apparatus. The request message is used to request to obtain the quality of the channel between the first apparatus and the second apparatus. The first apparatus sends the quality of the channel between the first apparatus and the second apparatus to the second apparatus, and then the second apparatus determines whether the quality of the channel between the first apparatus and the second apparatus satisfies the preset condition.

For another example, the second apparatus sends a request message to the first apparatus. The request message is used to request to determine whether the quality of the channel between the first apparatus and the second apparatus satisfies the preset condition. The first apparatus sends a response message to the second apparatus. The response message indicates whether the quality of the channel between the first apparatus and the second apparatus satisfies the preset condition.

For another example, the first apparatus periodically sends the quality of the channel between the first apparatus and the second apparatus to the second apparatus, and the second apparatus determines whether the quality of the channel between the first apparatus and the second apparatus satisfies the preset condition.

Condition 3: The second apparatus is online and a current status is normal (that is, the second apparatus is not in a busy or faulty state).

For example, the first apparatus and the second apparatus may periodically send a heartbeat packet to each other. The heartbeat packet is used by both apparatuses to determine whether a connection maintains. The second apparatus may determine, based on the heartbeat packet, whether a connection between the first apparatus and the second apparatus maintains. If a communication connection maintains, the second apparatus determines that the second apparatus is online. In addition, the second apparatus may determine, based on usage of a hardware resource and/or a software resource, whether the second apparatus is normal, that is, whether the second apparatus is in a busy or faulty state.

Condition 4: Preprocessed data obtained by preprocessing the point cloud data by the second apparatus satisfies a preset condition. For example, the preset condition includes at least one of the following: a signal-to-noise ratio of the preprocessed data is greater than a preset threshold, and a contrast of the preprocessed data is greater than a preset threshold.

The signal-to-noise ratio refers to a ratio of signal strength of the preprocessed data to interference noise of the preprocessed data. A larger signal-to-noise ratio indicates better quality of the preprocessed data. Therefore, the preprocessed data whose signal-to-noise ratio is greater than the preset threshold is sent to the first apparatus, to improve an effect of a point cloud fusion.

The contrast of the preprocessed data may be a standard deviation of pixel intensity corresponding to the preprocessed data. A larger contrast indicates that a highlight of an image represented by the preprocessed data is brighter and a shadow is darker. The preprocessed data whose contrast is greater than the preset threshold is sent to the first apparatus, to improve the effect of point cloud fusion.

Step 1003b: The N second apparatuses send notification information to the first apparatus. Correspondingly, the first apparatus receives the notification information.

Notification information sent by the $N_2$ second apparatuses indicates to participate in point cloud fusion, and notification information sent by the other $N-N_2$ second apparatuses indicates not to participate in point cloud fusion.

For example, the notification information may be carried in uplink control information (uplink control information, UCI) for sending. The first apparatus may determine, based on the notification information received from the N second apparatuses, a quantity of second apparatuses participating in point cloud fusion, where the quantity is equal to $N_2$.

Step 1004b: The first apparatus sends resource configuration information to the $N_2$ second apparatuses. Correspondingly, the $N_2$ second apparatuses receive the resource configuration information.

The resource configuration information is used for configuring a same air interface resource for the $N_2$ second apparatuses.

Step 1005b: The first apparatus sends indication information to the $N_2$ second apparatuses. Correspondingly, the $N_2$ second apparatuses receive the indication information.

The indication information indicates the $N_2$ second apparatuses to send the point cloud data on the same air interface resource.

Step 1005b may be performed between step 1003b and step 1004b, or may be performed between step 1004b and step 1006b. This is not limited in this application.

Step 1006b: $N_1$ second apparatuses in the $N_2$ second apparatuses respectively send point cloud data to the first apparatus on the same air interface resource. Correspondingly, the first apparatus receives the point cloud data.

Step 1006b is the same as step 902 in the embodiment of FIG. 9, and reference may be made to the foregoing description.

In the foregoing solution, the second apparatus itself determines whether to participate in point cloud fusion; and indicates, to the first apparatus, whether to participate in point cloud fusion. The first apparatus sends the resource configuration information to the $N_2$ second apparatuses participating in point cloud fusion; and indicates, by using the indication information, the $N_2$ second apparatuses to send the point cloud data on the same air interface resource. In this solution, an over-the-air computation architecture is used, and the plurality of second apparatuses send the point cloud data to the first apparatus on the same air interface resource. Because air interface data of the plurality of second apparatuses is sent on the same air interface resource, air interface resource utilization is improved, thereby reducing occupied transmission resources and communication delay. In addition, because the point cloud data of the plurality of second apparatuses is sent simultaneously and received simultaneously, avoiding individual superimposition of noise for each piece of point cloud data, and therefore reducing noise power.

It can be understood that, to implement the functions in the foregoing embodiments, the first apparatus or the second apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is executed through hardware or hardware driven by computer software depends on particular application scenarios and design constraint conditions of the technical solutions.

FIG. 11 and FIG. 12 are diagrams of possible structures of communication apparatuses according to an embodiment of this application. These communication apparatuses may be configured to implement the functions of the first apparatus or the second apparatus in the foregoing method embodiments, and therefore can also achieve the beneficial effects of the foregoing method embodiments. In embodiments of this application, the communication apparatus may be the first apparatus or the second apparatus shown in FIG. 1.

As shown in FIG. 11, the communication apparatus 1100 includes a processing unit 1110 and a transceiver unit 1120. The communication apparatus 1100 is configured to implement the function of the first apparatus or the second apparatus in the foregoing method embodiments.

When the communication apparatus 1100 is configured to implement a function of the first apparatus in the foregoing method embodiment, the processing unit 1110 is configured to: control the transceiver unit 1120 to send first configuration information to a plurality of second apparatuses. The first configuration information is used for sending point cloud data on a same air interface resource by the plurality of second apparatuses; and receive the point cloud data from at least two of the plurality of second apparatuses.

In a possible implementation, the processing unit 1110 is further configured to control the transceiver unit 1120 to send resource configuration information to the plurality of second apparatuses. The resource configuration information is used for configuring the air interface resource.

In a possible implementation, the processing unit 1110 is further configured to control the transceiver unit 1120 to send indication information to the at least two second apparatuses. The indication information indicates the at least two second apparatuses to send the point cloud data on the air interface resource.

In a possible implementation, the processing unit 1110 is further configured to control the transceiver unit 1120 to receive notification information from the plurality of second apparatuses. The notification information indicates whether to participate in point-cloud fusion.

In a possible implementation, the processing unit 1110 is further configured to determine, based on the notification information, a quantity of second apparatuses participating in point cloud fusion, where the quantity is equal to a quantity of the at least two second apparatuses.

In a possible implementation, the first configuration information includes an operation type or a preprocessing manner.

In a possible implementation, the first configuration information further includes a point cloud traversal manner, and the point cloud traversal manner is linear traversal or recursive traversal.

In a possible implementation, the operation type is a modulo operation or a geometric averaging operation.

In a possible implementation, the first configuration information further includes an operation parameter, and the operation parameter is used for preprocessing the point cloud data.

In a possible implementation, the operation type is a maximum value calculation operation, and the operation parameter includes an exponent.

In a possible implementation, the operation type is an averaging operation.

In a possible implementation, the processing unit 1110 is further configured to perform post-processing on the point cloud data based on a post-processing function.

In a possible implementation, the operation type is a weighted sum operation, and the operation parameter includes a weight.

When the communication apparatus 1100 is configured to implement a function of the second apparatus in the foregoing method embodiment, the processing unit 1110 is configured to: control the transceiver unit 1120 to receive the first configuration information from the first apparatus, where the first configuration information is used for sending the point cloud data on an air interface resource by the second apparatus; and send the point cloud data to the first apparatus on the air interface resource, where the air interface resource is further used for sending the point cloud data to the first apparatus by another apparatus.

In a possible implementation, the processing unit 1110 is further configured to control the transceiver unit 1120 to receive the resource configuration information from the first apparatus. The resource configuration information is used for configuring the air interface resource.

In a possible implementation, the processing unit 1110 is further configured to control the transceiver unit 1120 to receive the indication information from the first apparatus. The indication information indicates the second apparatus to send the point cloud data on the air interface resource.

In a possible implementation, the processing unit 1110 is further configured to control the transceiver unit 1120 to send the notification information to the first apparatus. The notification information indicates whether to participate in point-cloud fusion.

In a possible implementation, the first configuration information includes an operation type or a preprocessing manner.

In a possible implementation, the first configuration information further includes a point cloud traversal manner, and the point cloud traversal manner is linear traversal or recursive traversal.

In a possible implementation, the operation type is an averaging operation, a modulo operation, or a geometric averaging operation.

In a possible implementation, the first configuration information further includes an operation parameter, and the operation parameter is used for preprocessing the point cloud data.

In a possible implementation, the operation type is a maximum value calculation operation, and the operation parameter includes an exponent.

In a possible implementation, the operation type is a weighted sum operation, and the operation parameter includes a weight.

For more detailed descriptions about the processing unit 1110 and the transceiver unit 1120, directly refer to related descriptions in the foregoing method embodiments. Details are not described herein again.

A communication apparatus 1200 shown in FIG. 12 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to: store instructions executed by the processor 1210, input data required by the processor 1210 to run the instructions, or data generated after the processor 1210 runs the instructions; or when the processor is a logic circuit (device), store a configuration file of the logic circuit (device).

When the communication apparatus 1200 is configured to implement the foregoing method embodiments, the processor 1210 is configured to implement a function of the processing unit 1110, and the interface circuit 1220 is configured to implement a function of the processing unit 1110 and the transceiver unit 1120.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk drive, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the first apparatus or the second apparatus. Certainly, the processor and the storage medium may alternatively exist in the first apparatus or the second apparatus as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer program or instructions are loaded and executed on a computer, all or a part of the procedures or functions in embodiments of this application are performed. The computer may be a general-purpose computer, a dedicated computer, a computer network, a network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A data transmission method, comprising:

   sending, by a first apparatus, first configuration information to a plurality of second apparatuses, wherein the first configuration information is used for sending point cloud data on a same air interface resource by the plurality of second apparatuses; and
   receiving, by the first apparatus, point cloud data from at least two of the plurality of second apparatuses.

2. The method according to claim 1, wherein the method further comprises:
   sending, by the first apparatus, resource configuration information to the plurality of second apparatuses, wherein the resource configuration information is used for configuring the air interface resource.

3. The method according to claim 1 or 2, wherein the method further comprises:
   sending, by the first apparatus, indication information to the at least two second apparatuses, wherein the indication information indicates the at least two second apparatuses to send the point cloud data on the air interface resource.

4. The method according to claim 3, wherein the method further comprises:
   receiving, by the first apparatus, notification information from the plurality of second apparatuses, wherein the notification information indicates whether the second apparatus participates in point cloud fusion.

5. The method according to claim 4, wherein the method further comprises:
   determining, by the first apparatus based on the notification information, a quantity of second apparatuses participating in point cloud fusion, wherein the quantity is equal to a quantity of the at least two second apparatuses.

6. The method according to any one of claims 1 to 5, wherein the first configuration information comprises an operation type or a preprocessing manner.

7. The method according to claim 6, wherein the first configuration information further comprises a point cloud traversal manner, and the point cloud traversal manner is linear traversal or recursive traversal.

8. The method according to claim 6 or 7, wherein the operation type is a modulo operation or a geometric averaging operation.

9. The method according to claim 6 or 7, wherein the first configuration information further comprises an operation parameter, and the operation parameter is used for preprocessing the point cloud data.

10. The method according to claim 9, wherein the operation type is a maximum value calculation operation, and the operation parameter comprises an exponent.

11. The method according to claim 6 or 7, wherein the operation type is an averaging operation.

12. The method according to any one of claims 8 to 11, wherein the method further comprises:
    performing, by the first apparatus, post-processing on the point cloud data based on a post-processing function.

13. The method according to claim 9, wherein the operation type is a weighted sum operation, and the operation parameter comprises a weight.

14. A data transmission method, comprising:

    receiving, by a plurality of second apparatuses, first configuration information from a first apparatus, wherein the first configuration information is used for sending point cloud data on a same air interface resource by the plurality of second apparatuses; and

sending, by at least two of the plurality of second apparatuses, point cloud data to the first apparatus on the air interface resource.

15. The method according to claim 14, wherein the method further comprises:
receiving, by the plurality of second apparatuses, resource configuration information from the first apparatus, wherein the resource configuration information is used for configuring the air interface resource.

16. The method according to claim 14 or 15, wherein the method further comprises:
receiving, by the at least two second apparatuses, indication information from the first apparatus, wherein the indication information indicates the at least two second apparatuses to send the point cloud data on the air interface resource.

17. The method according to claim 16, wherein the method further comprises:
sending, by the plurality of second apparatuses, notification information to the first apparatus, wherein the notification information indicates whether the second apparatus participates in point cloud fusion.

18. The method according to any one of claims 14 to 17, wherein the first configuration information comprises an operation type or a preprocessing manner.

19. The method according to claim 18, wherein the first configuration information further comprises a point cloud traversal manner, and the point cloud traversal manner is linear traversal or recursive traversal.

20. The method according to claim 18 or 19, wherein the operation type is a modulo operation or a geometric averaging operation.

21. The method according to claim 18 or 19, wherein the first configuration information further comprises an operation parameter, and the operation parameter is used for preprocessing the point cloud data.

22. The method according to claim 21, wherein the operation type is a maximum value calculation operation, and the operation parameter comprises an exponent; or the operation type is a weighted sum operation, and the operation parameter comprises a weight.

23. A communication apparatus, comprising:
at least one processor, configured to run at least one of the following: computer instructions, a program, or a logic circuit, to cause the communication apparatus to perform the data transmission method according to any one of claims 1 to 13.

24. A communication system, comprising a first apparatus configured to perform the method according to any one of claims 1 to 13, and a plurality of second apparatus configured to perform the method according to any one of claims 14 to 22.

25. A computer program product, comprising a computer program, wherein when the computer program is executed by a communication apparatus, the method according to any one of claims 1 to 13 is implemented or the method according to any one of claims 14 to 22 is implemented.

26. A computer-readable storage medium, wherein the storage medium stores a computer program or instructions, and when the computer program or the instructions are executed by a communication apparatus, the method according to any one of claims 1 to 13 is implemented or the method according to any one of claims 14 to 22 is implemented.

FIG. 1

FIG. 2

FIG. 3

FIG. 4

**FIG. 5**

Imaging device 1 → Point cloud $x_1$

Point cloud $y$=Merge($x_1$, $x_2$)

Imaging scenario

Processing device

Imaging device 2 → Point cloud $x_2$

FIG. 6

$x_1$

$y = x_1 + x_2 + n$

Imaging device 1

$x_2$

Imaging device 2

Processing device

FIG. 7

Imaging device

Preprocessing: $x_1 \rightarrow f_1(x_1)$

Air interface accumulation:
$y = \Sigma f_k(x_k)$

Processing device

Post-processing: $z = g(y)$

Imaging device

Preprocessing: $x_2 \rightarrow f_2(x_2)$

FIG. 8

N second apparatuses | First apparatus

← 901: Configuration information —

— 902: Point cloud data →

FIG. 9

N₂ second apparatuses | First apparatus

1001a: Perform determining and determine that the N₂ second apparatuses in N second apparatuses participate in point cloud fusion

← 1002a: Resource configuration information

← 1003a: Configuration information —

← 1004a: Indication information —

— 1005a: Point cloud data →

FIG. 10(a)

N second apparatuses | First apparatus

← 1001b: Configuration information ―

1002b: The N second apparatuses determine whether to participate in point cloud fusion

― 1003b: Notification information →

1004b: Resource configuration information ←

← 1005b: Indication information ―

― 1006b: Point cloud data →

FIG. 10(b)

Communication apparatus 1100

Processing unit 1110

Transceiver unit 1120

FIG. 11

Communication apparatus 1200

Processor 1210 | Interface circuit 1220

Memory 1230

FIG. 12

## INTERNATIONAL SEARCH REPORT

| International application No. |
|---|
| **PCT/CN2023/081866** |

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, CNKI, ENTXTC, WPABS, VEN, ENTXT, IEEE: 配置, 设置, 点云, 相同, 同一, 同样, 空口, 时频, 波束, 资源, 两, 多, 各, 不同, config+, point, cloud, resource, two, each, same, beam

**C. DOCUMENTS CONSIDERED TO BE RELEVANT**

| Category* | Citation of document, with indication, where appropriate, of the relevant passages | Relevant to claim No. |
|---|---|---|
| A | CN 114041169 A (LG ELECTRONICS INC.) 11 February 2022 (2022-02-11)<br>claims 1-20, and description, paragraphs [0069]-[0643] | 1-26 |
| A | CN 113114608 A (SHANGHAI JIAO TONG UNIVERSITY) 13 July 2021 (2021-07-13)<br>entire document | 1-26 |
| A | US 2023061573 A1 (TENCENT TECHNOLOGY(SHENZHEN) COMPANY LIMITED) 02 March 2023 (2023-03-02)<br>entire document | 1-26 |
| A | LI, Shihua et al. "TREE POINT CLOUDS REGISTRATION USING AN IMPROVED ICP ALGORITHM BASED ON KD-TREE"<br>*2016 IEEE International Geoscience and Remote Sensing Symposium (IGARSS),*<br>31 December 2016 (2016-12-31),<br>entire document | 1-26 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 June 2023** | **07 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081866**

| Patent document cited in search report | | | Publication date (day/month/year) | Patent family member(s) | | | Publication date (day/month/year) |
|---|---|---|---|---|---|---|---|
| CN | 114041169 | A | 11 February 2022 | EP | 3992911 | A1 | 04 May 2022 |
| | | | | JP | 2022538680 | A | 05 September 2022 |
| | | | | US | 2022377327 | A1 | 24 November 2022 |
| | | | | WO | 2021002558 | A1 | 07 January 2021 |
| CN | 113114608 | A | 13 July 2021 | WO | 2021139784 | A1 | 15 July 2021 |
| | | | | KR | 20220124790 | A | 14 September 2022 |
| | | | | EP | 4090021 | A1 | 16 November 2022 |
| | | | | US | 2023048715 | A1 | 16 February 2023 |
| | | | | JP | 2023510822 | W | 15 March 2023 |
| US | 2023061573 | A1 | 02 March 2023 | WO | 2022222641 | A1 | 27 October 2022 |
| | | | | CN | 115243053 | A | 25 October 2022 |

Form PCT/ISA/210 (patent family annex) (July 2022)